# EUROPEAN PATENT SPECIFICATION

(11) **EP 2 302 592 B1**
(45) Date of publication and mention of the grant of the patent: **16.05.2012**
(21) Application number: 10007680.1
(22) Date of filing: 23.07.2010
(51) Int. Cl.: G06T 11/60

(54) **Layout editing system, layout editing method, and image processing apparatus**
Layoutbearbeitungssystem, Layoutbearbeitungsverfahren und Bildverarbeitungsvorrichtung
Système d'édition de format, procédé d'édition de format et appareil de traitement d'images

(30) Priority: 10.08.2009 JP 2009186145
(43) Date of publication of application: 30.03.2011
(73) Proprietor: Canon Kabushiki Kaisha, Tokyo (JP)
(72) Inventor: Iguchi, Ryosuke, Ohta-ku, Tokyo (JP)
(74) Representative: Weser, Thilo

(56) References cited:
- EP-A2- 1 701 308
- US-A1- 2003 053 145
- US-A1- 2005 024 681
- US-A1- 2008 089 612

## Description

### BACKGROUND OF THE INVENTION

### Field of the Invention

The present disclosure relates to a layout editing system, layout editing method, and image processing apparatus to lay out image data.

### Description of the Related Art

Thanks to recent development in the digital photography industry, users can easily create albums of photographs in hand. In particular, users can scan photographs at high image quality using advanced scanners, and can set various layouts, along with the popularization of information processing apparatus and album creation software in shop terminals. For example, a user scans photographs using a scanner and saves image data in an information processing apparatus. Then, he activates album creation software, selects images to be put in an album, and sets a layout using the mouse on the monitor. Alternatively, a user scans photographs using a shop terminal and manipulates a touch panel or the like to create an album.

However, adjusting the layout with the mouse or the like is very difficult for a user who is unaccustomed to the album creation software. Thus, there are proposed many methods and apparatus for compositing photographs on a template prepared in advance and creating a layout page. Japanese Patent Laid-Open No. 2002-218205 discloses an apparatus which allows a user to select a template of his choice from a plurality of templates printed on sheets, scan the sheet using a scanner, and automatically composite images. However, this apparatus puts a heavy burden on the user when searching for a layout of his choice.

There are also many methods and apparatus for scanning a double-page spread of a booklet original. For example, when a layout in which a photograph lies on two pages of a spread is created using an apparatus which scans pages one by one, the user needs to accurately place the photograph on the right and left pages. It is difficult for an inexperienced user to perform such scanning on the original table.
US 2003/0053145 A1 discloses an image processing apparatus comprising an operation panel which receives instruction of automatic edit processing of a plurality of photographic images, a scanner unit and an extracting unit which scan and extract said plurality of photographic images, and an image editing unit which outputs an edit image.

### SUMMARY OF THE INVENTION

An aspect of the present invention is to eliminate the above-mentioned problems with the conventional technology.

The present invention provides a layout editing system, layout editing method, and image processing apparatus for improving user friendliness when scanning photographs with a scanner to create an album.

The present invention in its first aspect provides a layout editing system as specified in claims 1 to 4.

The present invention in its second aspect provides a layout editing method as specified in claim 5.

The present invention in its third aspect provides a computer-readable storage medium as specified in claim 6.

The present invention in its fourth aspect provides an image processing apparatus as specified in claim 7.

The present invention can improve user friendliness when scanning photographs with a scanner to create an album.

Further features of the present invention will become apparent from the following description of exemplary embodiments with reference to the attached drawings.

### BRIEF DESCRIPTION OF THE DRAWINGS

Fig. 1 is a block diagram showing the schematic configuration of an album creation system;

Fig. 2 is a view for explaining an example in which photographs are arranged on an original table in an embodiment;

Fig. 3 is a view exemplifying a user interface;

Fig. 4 is a view showing a reference point on a photograph;

Fig. 5 is a view for explaining selection of a template based on a reference point;

Fig. 6 is a view showing an example in which a template having different photograph sizes is selected;

Fig. 7 is a view for explaining the relationship between the photograph orientation and the page mode;

Fig. 8 is a view for explaining the relationship between a photograph on the original table and the page mode;

Fig. 9 is a flowchart showing the sequence of processing to create page image data;

Fig. 10 is a view showing an example in which the photograph position is adjusted using grids;

Fig. 11 is a view showing reversal of a layout in the double-page spread mode; and

Fig. 12 is a view showing reversal of a layout in the full one-page mode.

### DESCRIPTION OF THE EMBODIMENTS

Preferred embodiments of the present invention will now be described hereinafter in detail, with reference to the accompanying drawings. It is to be understood that the following embodiments are not intended to limit the claims of the present invention, and that not all of the combinations of the aspects that are described according to the following embodiments are necessarily required with respect to the means to solve the problems according to the present invention.

Note that the same reference numerals denote the same parts, and a repetitive description thereof will be omitted.

### [First Embodiment]

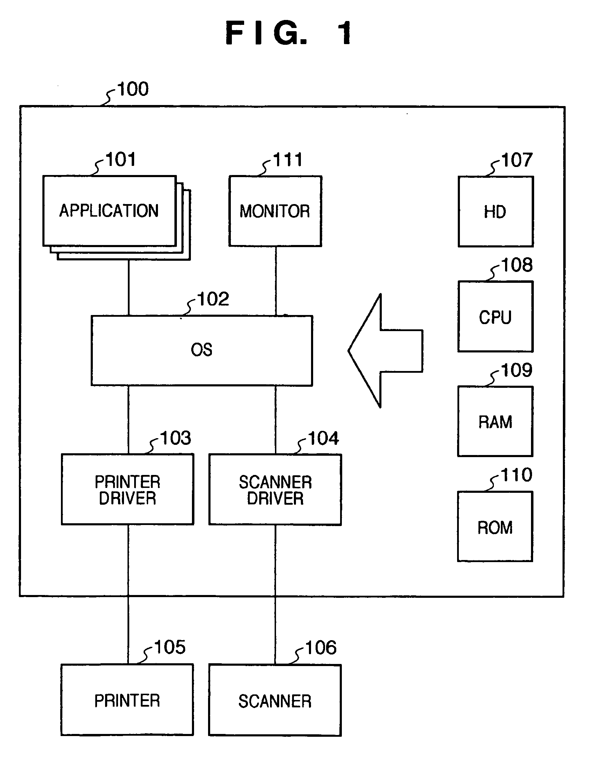

Fig. 1 shows the schematic configuration of an album creation system (layout editing system) which edits the layout of image data and creates an album. An image processing apparatus 100 such as a host computer is connected to, for example, a scanner 106 and a printer 105 such as an inkjet printer. The image processing apparatus 100 includes applications 101 such as album creation software, image processing software, word processing software, spreadsheet software, and Internet browser, an OS (Operating System) 102, and a monitor 111. The image processing apparatus 100 also includes, as software programs, a printer driver 103 which creates print data by processing various rendering instructions that are issued from the application 101 to the OS 102 and represent an output image, and a scanner driver 104 which transfers scanned data to the OS 102.

As a variety of hardware components for operating these software programs, the image processing apparatus 100 includes a hard disk drive (HD) 107, CPU 108, random access memory (RAM) 109, and read only memory (ROM) 110. In the configuration shown in Fig. 1, the image processing apparatus 100 uses, for example, Microsoft Windows XP® as the OS. An application capable of performing arbitrary print processing is installed in the image processing apparatus 100, and the scanner and printer are connected to the image processing apparatus 100.

In the image processing apparatus 100, based on an image displayed on the monitor 111, the application 101 creates output image data using text data classified into a text such as characters, image data classified into a natural image, and the like. When printing out the output image data, the application 101 issues a printout request to the OS 102. For the image data, the application 101 issues, to the OS 102, rendering instructions which include image rendering instructions and represent an output image. Upon receiving the output request from the application, the OS 102 issues rendering instructions to the printer driver 103 corresponding to an output printer. The printer driver 103 processes the print request and the rendering instructions input from the OS 102, creating print data printable by the printer 105. The printer driver 103 then transfers the print data to the printer 105. When the printer 105 is a raster printer, the printer driver 103 sequentially performs image correction processing in response to rendering instructions from the OS 102. The printer driver 103 sequentially rasterizes the rendering instructions in an RGB 24-bit page memory. After rasterizing all rendering instructions, the printer driver 103 corrects the contents in the RGB 24-bit page memory into a data format (e.g., CMYK data) printable by the printer 105, and transfers the data to the printer. The printer 105 prints based on the image data on a printing medium such as paper. In the album creation system according to the first embodiment, image data scanned by the scanner 106 is input to the image processing apparatus 100. For this purpose, the scanner 106 and image processing apparatus 100 transmit/receive data.

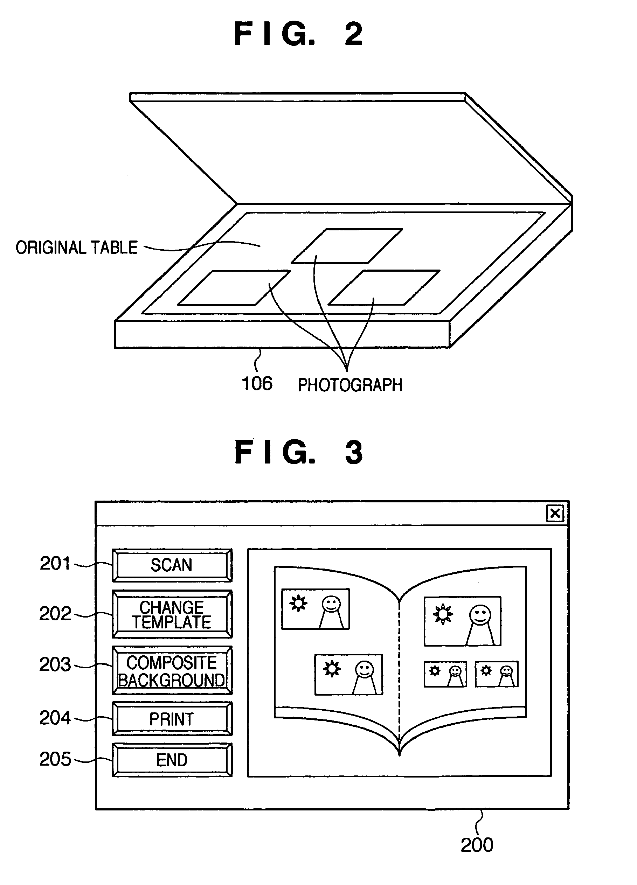

The album creation system in the first embodiment will be explained in detail. In the first embodiment, an album to be created is formed from A4-size portrait pages. First, the user sets, on the original table of the scanner 106, photographs to be loaded into the album. In this case, as shown in Fig. 2, the entire surface of the original table is regarded as one page of the album. The user freely arranges photographs in a layout he wants. The size of a photograph, its relative position on the original table, the number of photographs, and the like are arbitrary.

Then, the user activates album creation software 200 included in the applications 101. The album creation software 200 saves a scanned image, creates a layout on the monitor, and composites and prints images. Fig. 3 exemplifies the UI (User Interface) of the album creation software 200. The user clicks a scan button 201 of the album creation software 200 to scan originals set on the scanner 106 at once. The scanner 106 scans the entire surface of the original table to read originals. The album creation software 200 temporarily saves the generated original image data (image data). The temporarily saved image data is analyzed to detect the number and positions of arranged photographs. This image analysis method is called cropping. This technique is widely known, so a detailed description thereof will be omitted.

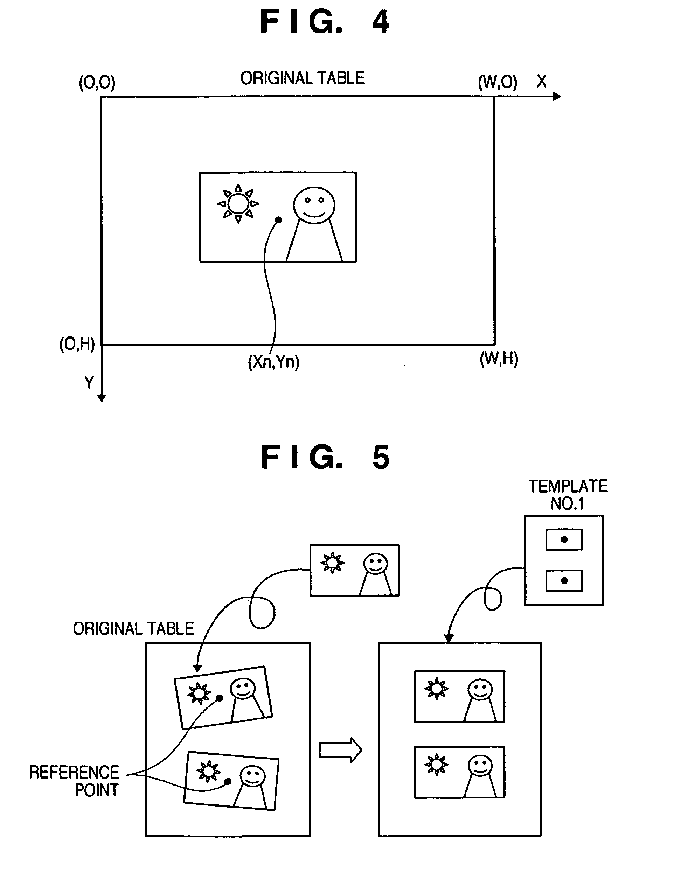

The photograph position recorded by cropping the relative position of a photograph on the original table. For example, when the original table is used as a coordinate system, the lateral dimension of the original table is W and its longitudinal dimension is H, as shown in Fig. 4. A photograph set on the original table is scanned, and the center point (Xn,Yn) of the photograph is calculated. This point is defined as a reference point in the photograph. The reference point is calculated for each cropped photograph to detect the position of the photograph on the original table and store it in a memory or the like. The reference point of a photograph may be a center point or an arbitrary point such as the upper left corner of a photograph. In this manner, the positions and number of photographs arranged on the original table can be detected.

Then, a template is automatically selected based on the number of reference points or a combination of the number and positions of reference points. A plurality of kinds of templates are prepared in advance in the album creation software 200. When templates are stored in a memory or the like, they will also be called layout data. The template numbers of all the templates, the number of photographs, photograph positions (i.e., image frames), and photograph sizes are stored in the memory as a list in the text file format, and are associated with respective templates. When automatically selecting a template, a template which best matches the number of scanned photographs or a combination of the positions and number of scanned photographs is selected from the list by referring to the list.

Photograph positions and photograph sizes in the selected template are read, and cropped photographs are composited at corresponding positions in the template. Fig. 5 shows an example in which template No. 1 which best matches the reference points (center points of photographs in Fig. 5) of photographs set on the original table is detected. In this case, two photographs are composited at photograph positions in template No. 1. If a page is created with a blank background, the page is completed. When compositing the background with another image or illustration, the user may click a background composition button 203 in the UI of Fig. 3, select a background image he wants, and create a page.

In the first embodiment, the entire surface of the original table is regarded as one page of a printing medium, and photographs are arranged on the entire surface. For this reason, it is most desirable to directly handle the entire surface of the original table as one page of an album. That is, when automatically selecting a template, a template in which the photograph size is equal to that of arranged photographs is selected as one first displayed on the monitor 111 to the user, in order to reproduce the size of arranged photographs. For example, when the user sets L-size photographs on the original table, the photograph size in an album page to be created is desirably the L size. Hence, a template in which the same size as that of photographs set on the original table is listed as shown in Fig. 5 is selected first.

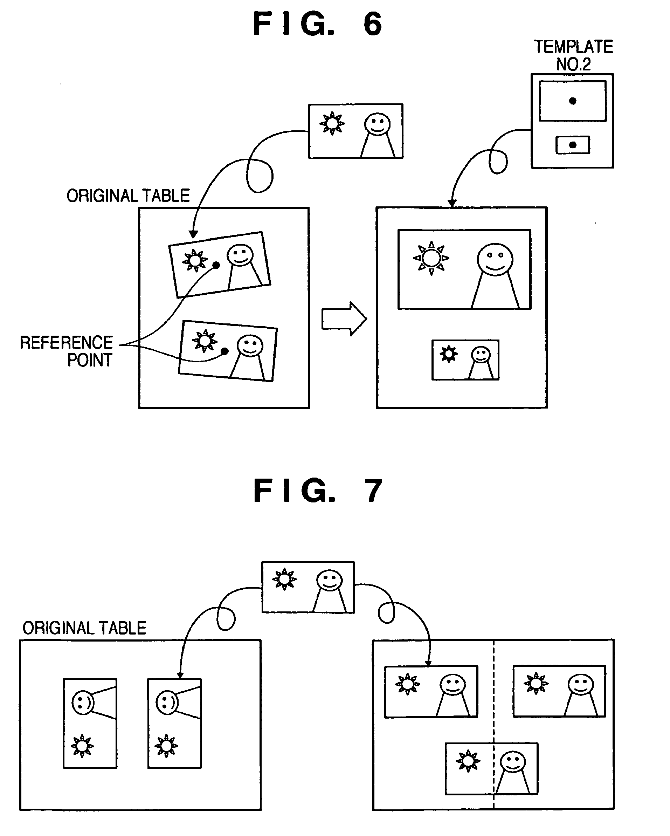

If the user wants to change the photograph size, he selects a template having different photograph sizes as shown in Fig. 6. Although the setting method is the same as that in Fig. 5, an image is enlarged or reduced in accordance with the photograph size in the template when compositing the image. First, the user confirms template No. 1 in the album creation software 200, and if he wants to change the template, clicks a template change button 202 in the UI. Then, a page created based on template No. 2 is displayed. In this way, the user can change a template serving as a layout data candidate used for layout editing and designate the one he wants. In the above description, the page orientation of the album is the portrait. However, the template setting method is the same even for a landscape page.

As described above, in the first embodiment, the user freely arranges photographs on the original table of the scanner. The positions and number of photographs are recorded, and a template which best matches them is automatically selected. As a result, the user can create the album layout more easily than a conventional one. By changing the template, the user can easily change the photograph size.

### [Second Embodiment]

The second embodiment will be described. In the second embodiment, an album to be created is also formed from portrait pages. When creating a layout in which a photograph lies on two pages of a spread, it is difficult to align the divided photographs well with each other at the page boundary by a method of scanning pages one by one. The second embodiment will explain a method of setting the original table of a scanner as a double-page spread.

Similar to the first embodiment, the user arranges photographs on the original table. In the first embodiment, the entire surface of the original table is regarded as one page, so a page is created using the long-side direction of the original table as the top-to-bottom direction of the page, as shown in Fig. 5. In contrast, when creating a layout while regarding the entire surface of the original table as a double-page spread, i.e., two, right and left pages, the short-side direction of the original table is defined as the top-to-bottom direction of the album, as shown in Fig. 7, thereby creating a layout the user wants.

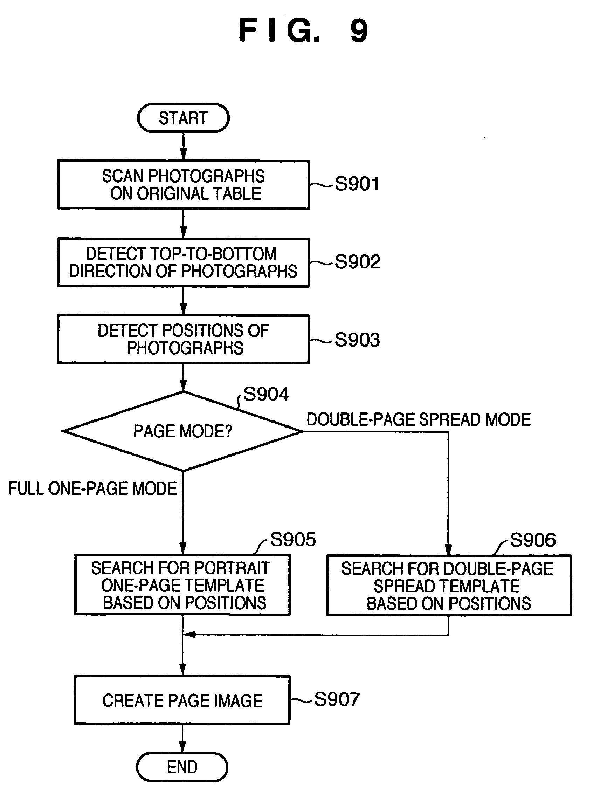

Fig. 9 is a flowchart showing the sequence of processing to create page image data in the second embodiment. For example, a CPU 108 executes the processing of the flowchart shown in Fig. 9. In step S901, photographs set on the original table by the user are scanned, similar to the first embodiment. Only when the user arranges photographs on the original table, it is not known which of a full one-page mode or double-page spread mode is set to scan the photographs. Thus, in step S902, the top-to-bottom direction of the arranged photographs is detected to automatically determine which mode is set to scan the photographs.

As a method for this purpose, the top-to-bottom direction of scanned/cropped image data is detected. The top-to-bottom direction detection method is, for example, face detection or scene analysis. In face detection, the face image of a person is extracted from an image and analyzed, and the number, positions, and orientations of persons are detected from the analyzed feature amount. By this method, the top-to-bottom direction of the image can be detected (image direction detection). In scene analysis, an object in a landscape photograph or the like is analyzed. For example, an object in a blue sky region or on the ground is detected to determine the top-to-bottom direction. Many other techniques are known in addition to face detection and scene analysis, but a detailed description thereof will be omitted. In this fashion, the top-to-bottom direction of a photograph is detected. If the top-to-bottom direction of the photograph coincides with the long-side direction of the original table, it is determined that the entire surface of the original table is regarded as one page. If the top-to-bottom direction of the photograph coincides with the short-side direction, it is determined that the entire surface of the original table is regarded as a double-page spread. Then, the page mode is switched to create a page.

In step S903, the positions of the photographs on the original table are detected. The detection method is the same as the reference point detection method described in the first embodiment. In step S904, it is determined based on the top-to-bottom direction of the photographs detected in S902, which of the full one-page mode and double-page spread mode is set. In S905 or S906, a template corresponding to either mode is selected. If it is determined that the full one-page mode is set, a template which best matches photograph positions is automatically selected from full one-page templates in step S905. If it is determined that the double-page spread mode is set, a template which best matches photograph positions is automatically selected from templates for each page of the double-page spread. In step S907, a page image corresponding to either mode is created.

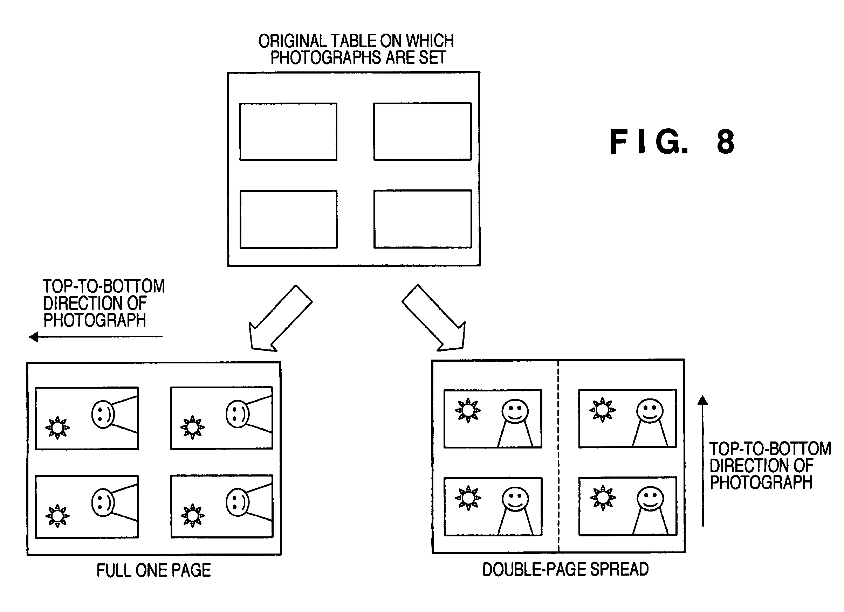

When photographs arranged as shown in Fig. 8 are scanned, it is not known which of the portrait direction and landscape direction is set to arrange the photographs. Thus, it is not known which mode is used to create a page. In the second embodiment, the photograph orientation is determined by executing the foregoing image analysis for cropped photographs and detecting the top-to-bottom direction. By setting the page mode in accordance with the determination result, the photograph direction can coincide with a direction the user wants, when the album is created.

In step S906, a template which matches the number of photographs and sets positions closest to photograph positions on the original table is automatically selected, similar to the first embodiment. In the double-page spread mode, the entire surface of the original table is divided into two, so the photograph size in one page is relatively doubled. In the second embodiment, as well as the first embodiment, a plurality of templates capable of changing the photograph size may be held. The user can click a template change button 202 to select a template of his choice.

When photographs are scanned in the double-page spread mode, the scanned image is divided into two, right and left parts, and album creation software 200 saves each part as one page. The user can click a print button 204 to print. When a photograph lies across the page boundary, the margin may be set so that the divided photographs align well with each other at the page boundary.

In step S902, the face position can be detected when the face is detected. If the detected face overlaps the page boundary, a photograph containing the face may be moved. In this case, the photograph is moved to a position where the face does not overlap the page boundary. The photograph is desirably moved to the right or left direction in which the moving amount is smaller. It is necessary to check whether another face overlaps the page boundary when the photograph is moved. If a face overlaps the page boundary again, it suffices to move the photograph again.

Upon moving, the photograph may overlap another one. In this case, the underling photograph is moved up, down, right, or left. In this layout correction, a desired one of templates may be selected again. Alternatively, a layout obtained by changing only photograph positions based on a template set first may be used.

A plurality of photographs arranged on the original table do not always face in the same direction. The user may arrange photographs in a wrong orientation. When the top-to-bottom directions of photographs are detected in S902 to determine that their directions are different, the UI of the album creation software 200 may display a warning to prompt the user to select either mode for scanning. Alternatively, the user may be prompted to confirm again the orientations of the photographs on the original table. Also, a direction in which a largest number of photographs among a plurality of photographs face may be automatically employed to select either mode.

As described above, in the second embodiment, the mode is switched by detecting the top-to-bottom direction of a photograph. However, it is also possible to disable the automatic top-to-bottom direction detection function and select a mode manually by the user. In this case, the user sets either the full one-page mode or double-page spread mode for scanning on the UI. Based on the setting, the page layout is created. By taking account of a double-page spread, the user arranges photographs on the original table, and can create a layout in which a photograph is arranged to lie across the page boundary and the balance between the right and left pages is considered.

### [Third Embodiment]

The third embodiment will describe a method of creating the layout of photographs without using a template. When photographs are arranged on the original table, they often tilt or their ends are not aligned. In the first and second embodiments, the template can be used to cancel the tilts of photographs or align their ends. However, the number of templates held in the album creation software 200 is limited. A method other than template setting needs to be provided to a user who wants to set a layout absent in templates or one who wants to finely adjust the position.

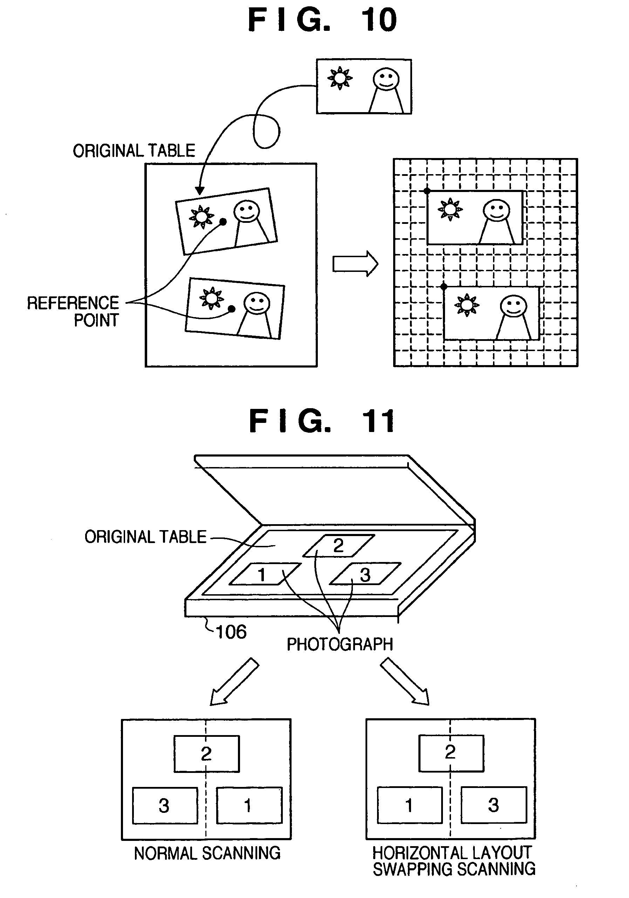

For this purpose, as shown in Fig. 10, grids (lattice points having predetermined intervals) serving as the references of photograph positions are set in a page. These grids are set in advance in a page prepared by album creation software 200, and are not drawn on the original table of a scanner. Similar to the first and second embodiments, photographs arranged on the original table are scanned to save cropped image data. At the same time, the number and positions of cropped photographs are detected. From the detection result, reference points are obtained for the respective photographs and compared with grids. The reference points are corrected to coincide with the nearest grids. In Fig. 10, the upper left corner point of a photograph is defined as a reference point. Any point may be used as a reference point as long as the position of a photograph arranged by the user does not greatly change. Therefore, even if a photograph set on the original table tilts, it can be held as a rectangular image in the course of cropping the photograph and converting it into image data. The horizontal and vertical directions of the image can be adjusted.

This processing is executed for all photographs arranged on the original table. The tilts of the photographs can be corrected to align their ends without changing the positions of the photographs on the original table. The album creation software 200 automatically executes grid processing. The user can freely arrange photographs on the original table without being aware of grids.

The user can also set the grid interval. When the user wants to perform finer adjustment than the grid interval shown in Fig. 10, he decreases the grid interval. By increasing the number of grids in one page, the user can more finely set photograph positions. When the user wants to arrange photographs at predetermined positions, he can set the grid interval to be larger than that shown in Fig. 10, creating a layout of his choice.

When the user has his favorite layout, he can newly save it as a template in the album creation software 200. The user can also create a layout using a transparent sheet that is equal in size to the original table and bears grids. On the transparent sheet, grids are drawn in a line low in density or small in width, which is enough for a man to visually check but not enough for a scanner to read. Alternatively, a color which can be visually checked by a man but cannot be read by a scanner may be calculated in advance based on the metamerism (color rendering) of the scanner. In this case, grids are drawn in this color on the transparent sheet. The user places the transparent sheet on the original table and arrange photographs along the grids. This method can suppress the tilts of photographs and align their ends when arranging the photographs on the original table.

### [Fourth Embodiment]

In the above-described embodiments, the entire surface of the original table is handled as an album page. To scan photographs in a layout the user wants, they need to be arranged by swapping their positions. That is, a layout the user wants to create, and a layout created on the original table are opposite in the horizontal or vertical direction. In this method, a user who is unaccustomed to the scanner may be confused about the arrangement. To solve this problem, the fourth embodiment will describe a method which allows the user to visually easily arrange photographs on the original table.

A case in which the entire surface of the original table is regarded as a double-page spread will be explained. Fig. 11 shows an outline of the fourth embodiment. When photographs 1 to 3 are arranged on the original table of the scanner, the scanned image is one in "normal scanning" in the left drawing of Fig. 11. According to this method, however, the positions of photographs 1 and 3 arranged on the original table are opposite in the horizontal direction. Thus, only the arrangement positions of the photographs are swapped in the horizontal direction while the vertical and horizontal directions of the photographs are kept unchanged. A layout in which photographs are laid out as they are arranged on the original table of the scanner can be directly applied to page creation.

First, the original table is regarded as a face-up album page. Then, the user arranges photographs in a layout he wants. In Fig. 11, the user arranges photograph 1 at a lower left portion on the left page of a double-page spread of an album, photograph 2 at an upper portion on the page boundary, and photograph 3 at a lower right portion on the right page. In this case, the user directly arranges the photographs as shown in the upper drawing of Fig. 11 without taking account of horizontal swapping upon scanning. Needless to say, the photographs are arranged on the original table facing down.

In this state, the photographs are scanned, cropped, and saved in album creation software 200. The number and positions of photographs are detected. In the double-page spread mode, the album creation software 200 swaps only the detected positions in the horizontal direction without changing the saved images. For example, the right and left images are swapped using a center line (dotted line shown in Fig. 11) set on the original table as a reference line. After that, a template is automatically selected to composite the images and background, creating a layout. The album page can be created without changing the arrangement of the photographs on the original table, like "horizontal layout swapping scanning" in the right drawing of Fig. 11.

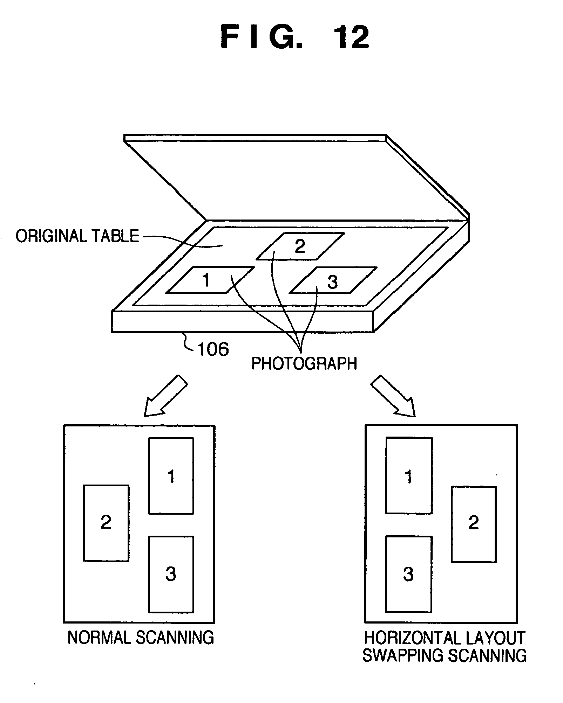

When the entire surface of the original table is regarded as one page, it is necessary to swap photographs in the vertical direction on the original table, i.e., the horizontal direction on a created album page. Fig. 12 shows this example. When photographs 1 to 3 arranged on the original table are scanned by a conventional method, the scanned image is the one in "normal scanning" in the left drawing of Fig. 12. That is, when the user regards the original table as a face-up album page and wants to create a layout of one portrait page, normal scanning results in a layout in which right and left photographs are swapped. To create an album page with a layout in which photographs are laid out as they are arranged, only the layout positions of the photographs are swapped in the horizontal direction while the vertical and horizontal directions of the photographs are kept unchanged. A page with a layout in which photographs are laid out as they are arranged on the original table facing up can be created, like "horizontal layout swapping scanning" in the right drawing of Fig. 12. As a matter of course, the photographs are arranged on the original table facing down.

The four embodiments have been described. The first embodiment has explained an image processing apparatus which detects the number and positions of photographs arranged on the original table, automatically selects, from templates held in advance, one which best matches the arrangement, and creates the album page layout. The second embodiment has explained an image processing apparatus which analyzes photographs arranged on the original table to detect the top-to-bottom direction. The entire surface of the original table is regarded as one portrait page if the top-to-bottom direction coincides with the long-side direction of the original table, and a double-page spread if it coincides with the short-side direction. By automatically selecting a template in accordance with the determination result, the album page layout is created.

The third embodiment has described an image processing apparatus which sets grids in a page, and creates a layout so that the reference point of a scanned photograph is adjusted to the nearest grid, thereby automatically correcting the tilt and position of the photograph. The fourth embodiment has explained an image processing apparatus which creates a layout the user wants, by swapping only the layout positions of scanned photographs in the horizontal direction in order to obtain, as a face-up page layout, a layout in which the photographs are laid out as they are arranged on the original table. These methods can reduce the burden on the user when easily creating an album layout by arranging photographs on the original table of a scanner.

### <Other Embodiments>

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

While the present invention has been described with reference to exemplary embodiments, it is to be understood that the invention is not limited to the disclosed exemplary embodiments.

## Claims

1. A layout editing system for editing a layout of original image data obtained by reading an original on an original table, the system comprising:
storage means configured to store a plurality of types of layout data which are used to edit the layout and have laid-out image frames;
reading means configured to read (S901) an original on the original table to generate original image data;
detection means configured to detect the number of originals on the original table;
selection means configured to select (S905, S906) layout data used to edit the layout, from the plurality of types of layout data stored in said storage means; and
layout editing means configured to lay out (S907) the original image data generated by said reading means using the layout data selected by said selection means,
**characterized in that** said detection means is configured to further detect (S903) positions of the originals on the original table, and
said selection means is configured to select layout data used to edit the layout, from the plurality of types of layout data stored in said storage means, based on the number and positions of originals detected by said detection means.

2. The system according to claim 1, further comprising:
direction detection means configured to calculate a feature amount of the original image data and detect (S902) a top-to-bottom direction of the image data based on the feature amount; and
determination means configured to determine (S904), from the top-to-bottom direction of the original image data detected by said direction detection means and a region in which an original on the original table is read, whether to lay out the original image data on two pages of a printing medium,
wherein the system is configured such that when said determination means determines to lay out the original image data on two pages of the printing medium, said selection means selects layout data used to edit the layout, from the plurality of types of layout data stored in said storage means, for the respective pages based on the positions of originals on the original table.

3. The system according to claim 2, configured such that when said determination means determines not to lay out the original image data on two pages of the printing medium, said selection means selects layout data used to edit the layout, from the plurality of types of layout data stored in said storage means, based on positions obtained by swapping horizontal layout positions of two originals detected by said detection means.

4. The system according to claim 2, configured such that when said determination means determines not to lay out the original image data on two pages of the printing medium, said selection means selects layout data used to edit the layout, from the plurality of types of layout data stored in said storage means, based on positions obtained by swapping, via a predetermined reference line, horizontal layout positions of two originals detected by said detection means.

5. A layout editing method executed in a layout editing system which edits a layout of original image data obtained by reading an original on an original table, the method comprising:
a storage step of storing a plurality of types of layout data which are used to edit the layout and have laid-out image frames;
a reading step (S901) of reading an original on the original table to generate original image data;
a detection step of detecting the number of originals on the original table;
a selection step (S905, S906) of selecting layout data used to edit the layout, from the plurality of types of layout data stored in the storage step; and
a layout editing step (S907) of laying out the original image data generated in the reading step using the layout data selected in the selection step;
**characterized in that** the detection step further detects (S903) positions of the originals on the original table, and
the selection step selects layout data used to edit the layout, from the plurality of types of layout data stored in the storage step, based on the number and positions of originals detected in said detection step.

6. A computer-readable storage medium storing an image processing program for causing a computer to implement each step of a layout editing method defined in claim 5.

7. An image processing apparatus which edits a layout of original image data obtained by reading an original on an original table, the apparatus comprising:
the layout editing system according to any one of claims 1 to 4; and
means for processing image data having a layout edited by the layout editing system.

## Patentansprüche

1. Layout-Editiersystem zum Editieren eines Layouts von durch Lesen eines auf einem Vorlagentisch befindlichen Originals erhaltenen Originalbilddaten, umfassend:
eine Speichereinrichtung, konfiguriert zum Speichern mehrerer Layoutdatentypen, welche zur Editierung des Layouts verwendet werden und laid-out Bildrahmen aufweisen;
eine Leseeinrichtung, konfiguriert zum Lesen (S901) eines auf dem Vorlagentisch befindlichen Originals, um Originalbilddaten zu generieren;
eine Detektoreinrichtung, konfiguriert zum Ermitteln der Anzahl von auf dem Vorlagentisch befindlichen Originalen;
eine Auswähleinrichtung, konfiguriert zur Auswahl (S905, S906) von zum Editieren des Layouts verwendeten Layoutdaten, aus den mehreren Layoutdatentypen, die in besagter Speichereinrichtung gespeichert sind; und
eine Layout-Editiereinrichtung, konfiguriert für das Layout (S907) der von der Leseeinrichtung generierten Originalbilddaten, und zwar unter Verwendung der von der Auswähleinrichtung ausgewählten Layoutdaten; **dadurch gekennzeichnet, dass**
die Detektoreinrichtung konfiguriert ist, um außerdem Positionen der Originale auf dem Vorlagentisch zu ermitteln (S903), und
die Auswähleinrichtung konfiguriert ist zum Auswählen von - in der Speichereinrichtung gespeicherten Layoutdaten zur Verwendung bei der Editierung des Layouts - aus den mehreren Layoutdatentypen, auf der Basis von Anzahl und Positionen von Originalen, wie von der Detektoreinrichtung ermittelt.

2. System nach Anspruch 1, weiterhin umfassend:
eine Richtungsdetektoreinrichtung, konfiguriert zur Berechnung einer Merkmalsmenge der Originalbilddaten und zur Ermittlung (S902) einer Oben-nach-Unten-Richtung der Bilddaten, basierend auf der Merkmalsmenge; und
eine Bestimmungseinrichtung, konfiguriert zur Bestimmung (S904) aus der Oben-nach-Unten-Richtung der von der Richtungsdetektoreinrichtung ermittelten Originalbilddaten und zur Bestimmung einer Zone, in welcher ein Original auf dem Vorlagentisch gelesen wird, ob die Originalbilddaten auf zwei Seiten eines Druckträgers aufzuteilen sind,
wobei das System derart konfiguriert ist, dass, wenn die Bestimmungseinrichtung bestimmt, die Originalbilddaten auf zwei Seiten des Druckträgers aufzuteilen, die Auswähleinrichtung, - und zwar aus den mehreren in der Speichereinrichtung gespeicherten Layoutdatentypen zur Editierung des Layouts verwendete Layoutdaten -, auswählt für die jeweiligen Seiten, basierend auf den Positionen von Originalen auf dem Vorlagentisch.

3. System nach Anspruch 2, derart konfiguriert, dass,
wenn die Bestimmungseinrichtung bestimmt, die Originalbilddaten nicht auf zwei Seiten des Druckträgers aufzuteilen, die Auswähleinrichtung zur Editierung des Layouts verwendete Layoutdaten, - und zwar aus den mehreren in der Speichereinrichtung gespeicherten Layoutdatentypen -, auf der Grundlage von Positionen auswählt, welche erhalten werden durch Austauschen von horizontalen Layout-Positionen zweier Originale, die von der Detektoreinrichtung ermittelt wurden.

4. System nach Anspruch 2, derart konfiguriert, dass,
wenn die Bestimmungseinrichtung bestimmt, dass die Originalbilddaten nicht auf zwei Seiten des Druckmediums aufzuteilen sind, die Auswähleinrichtung zur Editierung des Layouts verwendete Layoutdaten, - und zwar aus den mehreren in der Speichereinrichtung gespeicherten Layoutdatentypen -, basierend auf Positionen auswählt, die erhalten werden, indem über eine vorbestimmte Referenzlinie Horizontal-Layoutpositionen zweier von der Detektoreinrichtung ermittelter Originale ausgetauscht werden.

5. Layout-Editierverfahren, welches in einem Layout-Editiersystem ausgeführt wird, welches ein Layout von Originalbilddaten editiert, die erhalten werden durch Lesen eines auf einem Vorlagentisch befindlichen Originals, umfassend:
einen Speicherschritt zum Speichern mehrerer Layoutdatentypen, die zur Editierung des Layouts verwendet werden und aufgeteilte Bildrahmen enthalten;
einen Leseschritt (S901) zum Lesen eines auf dem Vorlagentisch befindlichen Originals, um Originalbilddaten zu generieren;
einen Ermittlungsschritt zum Ermitteln der Anzahl von auf dem Vorlagentisch befindlichen Originalen;
einen Auswählschritt (S905, S906) zur Auswahl von beim Editieren des Layouts verwendeten Layoutdaten, aus den mehreren in dem Speicherschritt gespeicherten Layoutdatentypen; und
einen Layout-Editierungsschritt (S907) zur Aufteilung der in dem Leseschritt generierten Originalbilddaten, und zwar unter Verwendung der im Auswählschritt ausgewählten Layoutdaten;
**dadurch gekennzeichnet, dass**
der Ermittlungsschritt außerdem Positionen der Originale auf dem Vorlagentisch ermittelt (S903), und
der Auswählschritt zwecks Editierung des Layouts verwendete Layoutdaten aus den mehreren Typen von in dem Speicherschritt gespeicherten Layoutdaten, und zwar basierend auf der Anzahl und den Positionen von Originalen, die in dem Ermittlungsschritt ermittelt wurden, auswählt.

6. Computerlesbares Speichermedium zum Speichern eines Bildverarbeitungsprogramms, welches einen Computer veranlasst, jeden Schritt eines Layout-Editierverfahrens nach Anspruch 5 zu implementieren.

7. Bildverarbeitungsvorrichtung, die ein Layout von durch Lesen eines auf einem Vorlagentisch befindlichen Originals erhaltenen Originalbilddaten editiert, umfassend:
das Layout-Editiersystem nach einem der Ansprüche 1 bis 4; und
eine Einrichtung zur Verarbeitung von Bilddaten mit einem vom Layout-Editiersystem editierten Layout.

## Revendications

1. Système de modification de mise en page pour modifier une mise en page de données d'images originales obtenues en lisant un original sur une table pour originaux, le système comprenant :
un moyen de stockage configuré pour stocker une pluralité de types de données de mise en page qui sont utilisés pour modifier la mise en page et ont des cadres d'images mis en page ;
un moyen de lecture configuré pour lire (S901) un original sur la table pour originaux afin de générer des données d'images originales ;
un moyen de détection configuré pour détecter le nombre d'originaux sur la table pour originaux ;
un moyen de sélection configuré pour sélectionner (S905, S906) des données de mise en page utilisées pour modifier la mise en page, parmi la pluralité de types de données de mise en page stockés dans ledit moyen de stockage ; et
un moyen de modification de la mise en page configuré pour mettre en page (S907) les données d'images originales générées par ledit moyen de lecture en utilisant les données de mise en page sélectionnées par ledit moyen de sélection,
**caractérisé en ce que** ledit moyen de sélection est configuré pour détecter (S903) en outre des positions des originaux sur la table pour originaux, et
ledit moyen de sélection est configuré pour sélectionner des données de mise en page utilisées pour modifier la mise en page, parmi la pluralité de types de données de mise en page stockés dans ledit moyen de stockage, sur la base du nombre et des positions d'originaux détectés par ledit moyen de détection.

2. Système selon la revendication 1, comprenant en outre :
un moyen de détection de direction configuré pour calculer une quantité de caractéristiques des données d'images originales et pour détecter (S902) l'orientation du haut vers le bas des données d'images sur la base de la quantité de caractéristiques ; et
un moyen de détermination configuré pour déterminer (S904), à partir de la direction du haut vers le bas des données d'images originales détectées par ledit moyen de détection de direction et d'une région dans laquelle un original est lu sur la table pour originaux, s'il est nécessaire de mettre en page les données d'images originales sur deux pages d'un support d'impression,
le système étant configuré de manière à ce que, lorsque ledit moyen de détermination détermine qu'il est nécessaire de mettre en page les données d'images originales sur deux pages du support d'impression, ledit moyen de sélection sélectionne des données de mise en page utilisées pour modifier la mise en page, parmi la pluralité de types de données de mise en page stockés dans ledit moyen de stockage, pour les pages respectives sur la base des positions des originaux sur la table pour originaux.

3. Système selon la revendication 2, configuré de manière à ce que, lorsque ledit moyen de détermination détermine qu'il n'est pas nécessaire de mettre en page les données d'images originales sur deux pages du support d'impression, ledit moyen de sélection sélectionne des données de mise en page utilisées pour modifier la mise en page, parmi la pluralité de types de données de mise en page stockés dans ledit moyen de stockage, sur la base de positions obtenues en permutant des positions de mise en page horizontales de deux originaux détectés par ledit moyen de détection.

4. Système selon la revendication 2, configuré de manière à ce que, lorsque ledit moyen de détermination détermine qu'il n'est pas nécessaire de mettre en page les données d'images originales sur deux pages du support d'impression, ledit moyen de sélection sélectionne des données de mise en page utilisées pour modifier la mise en page, parmi la pluralité de types de données de mise en page stockés dans ledit moyen de stockage, sur la base de positions obtenues en permutant, par rapport à une ligne de référence prédéterminée, des positions de mise en page horizontales de deux originaux détectés par ledit moyen de détection.

5. Procédé de modification de mise en page exécuté dans un système de modification de mise en page qui modifie une mise en page de données d'images originales obtenues par lecture d'un original sur une table pour originaux, le procédé comprenant :
une étape de stockage consistant à stocker une pluralité de types de données de mise en page qui sont utilisés pour modifier la mise en page et ont des cadres d'images mis en page ;
une étape de lecture (S901) consistant à lire un original sur la table pour originaux afin de générer des données d'images originales ;
une étape de détection consistant à détecter le nombre d'originaux sur la table pour originaux ;
une étape de sélection (S905, S906) consistant à sélectionner des données de mise en page utilisées pour modifier la mise en page, parmi la pluralité de types de données de mise en page stockés lors de l'étape de stockage ; et
une étape de modification de mise en page (S907) consistant à mettre en page les données d'images originales générées lors de l'étape de lecture en utilisant les données de mise en page sélectionnées lors de l'étape de sélection ;
**caractérisé en ce que** l'étape de détection détecte (S903) en outre des positions des originaux sur la table pour originaux, et
**en ce que** l'étape de sélection sélectionne des données de mise en page utilisées pour modifier la mise en page, parmi la pluralité de types de données de mise en page stockés lors de l'étape de stockage, sur la base du nombre et des positions des originaux détectés lors de ladite étape de détection.

6. Support de stockage lisible par ordinateur stockant un programme de traitement d'images destiné à amener un ordinateur à mettre en oeuvre chaque étape d'un procédé de modification de mise en page défini à la revendication 5.

7. Appareil de traitement d'images qui modifie une mise en page de données d'images originales obtenues par lecture d'un original sur une table pour originaux, l'appareil comprenant :
le système de modification de mise en page selon l'une quelconque des revendications 1 à 4, et
un moyen de traitement de données d'images ayant une mise en page modifiée par le système de modification de mise en page.
